# EUROPEAN PATENT APPLICATION

(11) **EP 2 316 560 A1**
(43) Date of publication of application: **04.05.2011**
(21) Application number: 10189233.9
(22) Date of filing: 28.10.2010
(51) Int. Cl.: B01D 69/02, B01D 71/68, B01D 69/08

(54) **Method of preparing a hollow membrane for mass transfer between a liquid phase and a gaseous phase**

(30) Priority: 29.10.2009 IT BO20090705
(71) Applicant: Medica S.p.A., Medolla (MO) (IT)
(72) Inventor: Fecondini, Luciano, 40129 Bologna (IT); Palumbo, Giuseppe, 41121 Modena (IT)
(74) Representative: Jorio, Paolo

(57) **Abstract**

A method for preparing a hollow membrane for mass transfer between a liquid phase and a gaseous phase, comprising: preparing a polymeric paste obtained by mixing from 13 to 39% of a polymer belonging to the class of polysulphones with a polar aprotic solvent. The blend is extruded from an annular opening of an annular section extruder head with concomitant injection from the extruder head of a precipitant solution into the forming hollow membrane. The precipitant solution consists of 5 - 55% by weight of a polar aprotic solvent and of 45 - 95% by weight of a solvent selected from the group consisting of acetone, methylethylketone, glycerol, water, ethylene glycol, ethanol, butanol and isopropyl alcohol.

## Description

The present invention relates to a method of preparing a hollow membrane useful for mass transfer between a liquid phase and a gaseous phase.

In particular, the present invention relates to a membrane for oxygen and carbon dioxide exchange between blood and a gaseous stream consisting of mixtures of air and oxygen or pure oxygen, as the description explicitly refers to without loss in generality.

In the past, blood oxygenation was performed by bubble and film oxygenators. These oxygenators, however, resulted in a series of risks for the patient. In fact, the introduction of microemboli into the circulation (due to the presence of non-fully defoamed blood) and occurrence of excessive hemolysis and protein denaturation were possible, with consequent activation of coagulation processes.

As an alternative to these oxygenators, for quite some time now, permeable membranes capable of allowing oxygen to pass between a gaseous phase rich in oxygen and the blood have been developed.

This type of membranes is currently made of polypropylene or polymethylpentene. Although these membranes are effective to the purposes of oxygenation, they have however a low biocompatibility and involve a particularly complex manufacturing procedure. Some of the reasons of the complexity may be, for example, the use of highly toxic compounds (such as dioctylphthalate, isopropyl mirystate, etc.) and oil in the feeding step, the need of carrying out washing steps for removing oil, and the use of high extrusion temperatures (from 220 to 280°C) .

Therefore, a need was felt to have a membrane, the technical features of which would be capable of ensuring a selective mass transfer between fluids without incurring in the drawbacks of the prior art.

The object of the present invention is a method of preparing a hollow membrane for mass transfer between a liquid phase and a gaseous phase; said method being characterized in that it comprises
- a step of preparing a polymeric paste by mixing from 13 to 39% of a polymer belonging to the class of polysulphones with a polar aprotic solvent, and
- a step of extruding said polymeric paste through an annular opening of an extruder head with concomitant injection from the extruder head of a precipitant solution into the hollow membrane being formed
said precipitant solution consisting of 5 to 55% by weight of a polar aprotic solvent and of 45 to 95% by weight of a solvent from the group consisting of acetone, methylethylketone, glycerol, water, ethylene glycol, ethanol, butanol and isopropyl alcohol.

The polar aprotic solvent is preferably selected from the group consisting of dimethylsulfoxide, dimethylformamide, dimethylacetamide and n-methyl-2-pyrrolidone.

The polymeric paste preferably comprises up to 15% by weight of a solvent selected from the group consisting of acetone, methylethylketone, glycerol, water, ethylene glycol, ethanol, butanol and isopropyl alcohol.

The polymeric paste and the precipitant solution, before being fed to the extruder head, are preferably subjected to a de-gassing and filtering process.

A further object of the present invention is a membrane, being characterized in that it is made by the above method and has a cut-off value from 10 to 500 KDa, preferably from 25 to 100 KDa.

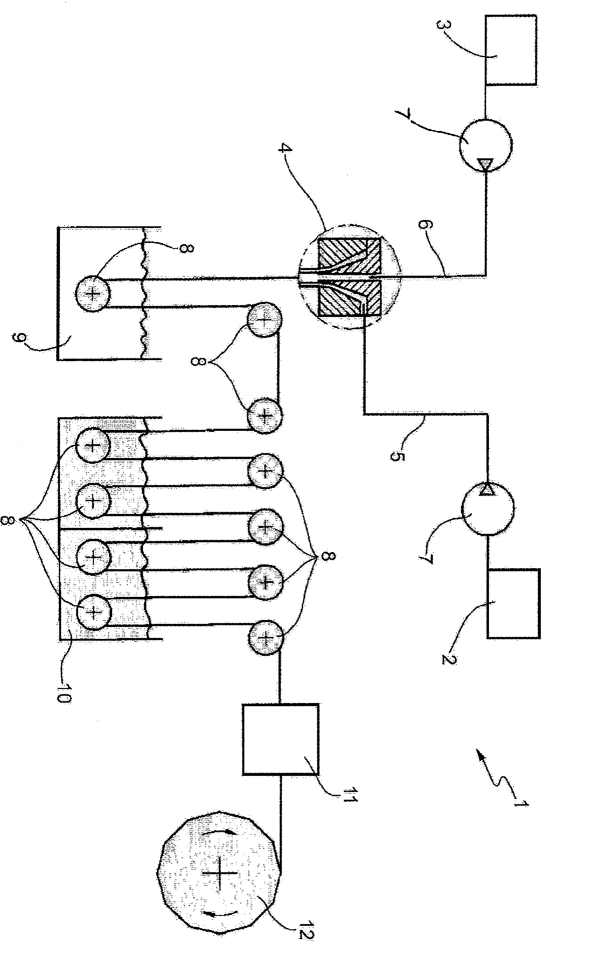

For a better understanding of the invention, some related embodiments are reported below, merely by way of non limiting illustration, with the aid of the accompanying figure, which diagrammatically depicts the process object of the present invention.

In the accompanying figure, numeral 1 indicates as a whole a system for manufacturing the hollow membranes made by the method object of the present invention. System 1 comprises a polymeric paste tank 2, a precipitant solution tank 3, an extruder head 4, a first line 5 for feeding the polymeric paste to the extruder head 4, a second line 6 for feeding the precipitant solution to the extruder head 4, pumping means 7 arranged on both the first 5 and the second 6 feeding lines, a plurality of membrane drawing rollers 8, a coagulation bath 9, two or more washing baths 10, drying means 11 and a reel with collecting coils 12.

### EXAMPLES

Two examples of producing hollow polysulphone membranes are given below according to the procedure object of the present invention.

### EXAMPLE 1

### - Polymeric paste -

A polymeric paste was prepared by mixing granules of polysulphone marketed under the trademark Ultrason S (BASF) in the solvent dimethylsulfoxide. The weight ratios of the polymeric paste obtained are 68% for the solvent and 32% for the polysulphone polymer.

The dosage took place at room temperature, while the mixing was performed at a temperature of 70°C under mechanical stirring in an inert environment (nitrogen atmosphere) for 35 hrs.

The so prepared polymeric paste was de-gassed under vacuum (200 absolute mbars for 5 hrs) and then filtered by means of a 20 µm metal mesh filter.

### - Precipitant solution -

The precipitant solution was obtained by mixing 35% by weight of dimethylsulfoxide with 65% by weight of ethanol at room temperature for 2 hrs by means of a paddle mixer.

### - Extrusion -

The two components were fed to the extrusion dies thermostated at 28°C.

In particular, the polymeric paste was extruded through an annular opening, while the precipitant solution was insufflated through a capillary opening into the annular opening and, therefore, into the forming hollow membrane.

The formed membranes were carried to a coagulation bath heated at 60°C, through an air gap at 50°C and 85% of relative humidity.

After washing at 70°C and drying, a hollow polysulphone membrane having an inner diameter of 250 µm and a thickness of 50 µm was collected.

### EXAMPLE 2

### - Polymeric paste -

A polymeric paste was prepared by mixing the granules of polysulphone marketed under the trademark Ultrason E (BASF) in the solvent dimethylacetamide. The weight ratios of the obtained polymeric paste are 76% for the solvent and 24% for the polysulphone polymer.

The dosage took place at room temperature, while the mixing was performed at a temperature of 70°C under mechanical stirring in an inert environment (nitrogen atmosphere) for 25 hrs.

The so prepared polymeric paste was de-gassed under vacuum (200 absolute mbars for 5 hrs) and then filtered by means of a 20 µm metal mesh filter.

### - Precipitant solution -

The precipitant solution was obtained by mixing 20% by weight of dimethylacetamide with 80% by weight of ethanol at room temperature for 2 hrs by means of a paddle mixer.

### - Extrusion -

The two components were fed to the extrusion dies thermostated at 25°C and the extrusion took place according to the modes reported in the Example 1.

The formed membranes were conducted to a coagulation bath heated at 60°C, through an air gap at 50°C and 85% of relative humidity.

After washing at 70°C and drying, a hollow polysulphone membrane having an inner diameter of 250 µm and a thickness of 50 µm was collected.

### OXYGENATION TESTS

The two membranes made in the above-described examples were assembled into oxygenation devices with an exchange area of about 0.8 m².

The oxygenation tests were performed *in vitro* with bovine blood. Specifically, the oxygenation tests provided for a flow of O₂ at a determined flow rate inside the hollow membrane, and a flow of blood to be oxygenated outside the hollow membrane.

For each of the two membranes, both the type of blood according to the percentage of hemoglobin and the blood and oxygen flow rates used were altered.

In tables I and II, for the hollow membranes made in example 1 and example 2, respectively, there are the values related to the flow rates of O₂ and blood, to the percentage of hemoglobin present into the blood, to both venous and arterial saturation percentage, to both venous and arterial partial pressure of O₂, and to the amount of O₂ transferred.

**Table I**

| Hb [g/dl] | Saturation % | | PO₂ [mmHg] | | Qblood [lpm] | QO₂ [lpm] | 02 transferred [ml/min] / [L/min]_{blood} |
|---|---|---|---|---|---|---|---|
| | venous | arterial | venous | arterial | | | |
| 12.0 | 65.4 | 97.1 | 38.1 | 81.7 | 0.5 | 1.0 | 52.8 |
| 12.2 | 66.4 | 97.9 | 38.4 | 83.2 | 1.0 | 1.0 | 53.6 |
| 12.5 | 64.3 | 100 | 37.4 | 108.2 | 1.0 | 2.0 | 55.9 |

**Table II**

| Hb [g/dl] | Saturation % | | PO₂ [mmHg] | | Qblood [lpm] | QO₂ [lpm] | 02 transferred [ml/min] / [L/min]_{blood} |
|---|---|---|---|---|---|---|---|
| | venous | arterial | venous | arterial | | | |
| 12.9 | 65.8 | 100 | 38.2 | 85.0 | 0.5 | 1.0 | 59.9 |
| 13.2 | 65.3 | 98.0 | 37.9 | 83.6 | 1.0 | 1.0 | 54.0 |
| 12.4 | 64.5 | 97.0 | 37.6 | 81.5 | 1.0 | 2.0 | 52.5 |

As it is apparent from the values in Tables I and II, the hollow membranes made according to the present invention are capable of ensuring an efficient oxygen transfer. Furthermore, the method object of the present invention does not involve the usage of oil neither of particularly high temperatures, and uses polysulphone as a polymer material, which has a higher biocompatibility than the material of known art membranes.

A further feature which makes the membranes made according to the present invention particularly effective, relates to their high hydrophobicity, which ensures the separation required of the two liquid and gaseous phases from the opposite sides of the membrane.

Finally, the polysulphone membranes made according to the present invention are particularly applied in blood oxygenation and decapneization, in water and aqueous solution oxygenation (fields of water depuration with active sludge), in carbon dioxide enrichment of liquids used in the food field, in degassing of water, aqueous solutions and viscous liquids for medical use (by applying the vacuum to the external side of the fiber), and in all medical and industrial applications in which "moving" a gas component from a liquid phase to a gaseous phase and vice versa is required.

## Claims

1. A method of preparing a hollow membrane for mass transfer between a liquid phase and a gaseous phase; the said method being **characterized in that** it comprises
- a step of preparing a polymeric paste by mixing from 13 to 39% of a polymer belonging to the class of polysulphones with a polar aprotic solvent, and
- an extrusion of the said polymeric paste through an annular opening of an extruder head with concomitant injection from the extruder head of a precipitant solution within the hollow membrane being formed;
the said precipitant solution being constituted by 5 to 55 % by weight of a polar aprotic solvent and by 45 to 95 % by weight of a solvent selected from the group consisting of acetone, methylethylketone, glycerol, water, ethyleneglycol, ethanol, butanol and isopropyl alcohol.

2. The method according to claim 1, **characterized in that** the said precipitant solution is constituted by 15 to 45% by weigh of a polar aprotic solvent and by 55 to 85% by weigh of a solvent selected from the group consisting of acetone, methylethylketone, glycerol, water, ethyleneglycol, ethanol, butanol and isopropyl alcohol.

3. The method according to claim 1 or 2, **characterized in that** the polar aprotic solvent is selected from the group consisting of dimethylsulfoxide, dimethylformamide, dimethylacetamide and n-methyl-2-pyrrolidone.

4. The method according to any of the preceding claims, **characterized in that** the polymeric paste comprises up to 15 % by weight of a solvent selected from the group consisting of acetone, methylethylketone, glycerol, water, ethyleneglycol, ethanol, butanol and isopropyl alcohol.

5. The method according to any of the preceding claims, **characterized in that** the polymeric paste and the precipitant solution before being fed to the extruder head are subjected to a de-gassing and filtering process.

6. A hollow membrane **characterized by** being implemented by the method according to any of the preceding claims and presenting a cut-off between 10 and 500 KDa.

7. The hollow membrane according to claim 6, **characterized in that** it presents a cut-off between 25 and 100 KDa.
